# EUROPÄISCHE PATENTANMELDUNG

(11) **EP 2 805 607 A1**
(43) Veröffentlichungstag der Anmeldung: **26.11.2014**
(21) Anmeldenummer: 13198732.3
(22) Anmeldetag: 20.12.2013
(51) Int. Cl.: A01K 1/015

(54) **Tiereinstreu**

(30) Priorität: 08.01.2013 DE 102013000093
(71) Anmelder: J. Rettenmaier & Söhne GmbH + Co. KG, 73494 Rosenberg (DE)
(72) Erfinder: Rettenmaier, Josef Otto, 73494 Rosenberg (DE)
(74) Vertreter: Dr. Weitzel & Partner

(57) **Zusammenfassung**

Die Erfindung betrifft eine organische Tiereinstreu, umfassend die folgenden Merkmale beziehungsweise Bestandteile:
- wenigstens 30 % granulierte Holzpartikel, bezogen auf die Gesamtmenge der Tiereinstreu;
- wenigstens 10 Prozent, bevorzugt wenigstens 20 Prozent, besonders bevorzugt wenigstens 30 Prozent der Granulatkörner weisen eine maximale Abmessung von kleiner 3 mm auf;
- der Abrieb der Granulate liegt zwischen 2 und 30 Gewichtsprozent;
- mindestens 3 Gewichtsprozent Klumpenbildner;
- die Saugdauer liegt zwischen 60 und 10 s, bevorzugt zwischen 45 und 10s, am besten zwischen 30 und 10s, gemessen nach dem Vortex-Verfahren

## Beschreibung

Die Erfindung betrifft eine Einstreu für Tiere, besonders für Katzen und andere Kleintiere, umfassend Holzpartikeln. Die Einstreu dient zum Befüllen einer Tiertoilette (Katzentoilette). Die Katzentoilette besteht im Allgemeinen aus einem Kasten, beispielsweise aus Kunststoff. Das Tier verrichtet sein vorwiegend flüssiges Geschäft in der Katzentoilette. Der Urin wird dabei von der Einstreu aufgesaugt. Die Einstreu wird von Zeit zu Zeit ganz oder teilweise ausgetauscht.

Die Tiereinstreu soll gewisse Eigenschaften haben. Sie soll insbesondere saugfähig sein, sodass der Tierurin von der Einstreu weitgehend abgefangen wird und nicht auf den Boden der Katzentoilette gelangt. Die Tiereinstreu soll sich leicht entsorgen lassen. Deshalb ist es wünschenswert, dass die benetzten Anteile der Einstreu Klumpen bilden, die getrennt von der noch unbenetzten Einstreu der Katzentoilette entnommen und entsorgt werden können. Die Tiereinstreu soll ferner einen geringen Abrieb aufweisen, sodass ein Stauben vermindert wird. Ein wichtiges Erfordernis ist es, die Tiereinstreu derart zu gestalten, dass sie sich möglichst wenig an das Fell des Tieres anhängt, sodass dieses nach Verlassen der Toilette nicht Tiereinstreu in Wohnräumen verbreitet.

Als besonders unangenehm wird es von der Hausfrau empfunden, wenn der Urin auf den Boden der Katzentoilette durchläuft. Ist der Boden der Katzentoilette mit Urin beschmutzt, so verteilt er sich dort auf einer relativ großen Fläche, bevor er über längere Zeit nach und nach von der darüber befindlichen Einstreu aufgesaugt wird. Dies hat mehrere Nachteile. Zum einen wird deutlich mehr Einstreu benetzt, wodurch die Ergiebigkeit erheblich zurückgeht. Zum anderen ist es in der Praxis fast unmöglich, die benetzten Teile der Einstreu vollständig aus der Toilette zu entfernen, sodass relativ schnell eine unangenehme Geruchsentwicklung auftritt und der gesamte Inhalt der Toilette entsorgt werden muss, damit eine gründliche Reinigung erfolgen kann. Dadurch steigt der Verbrauch an Einstreu weiter an.

Es sind eine Vielzahl von Tiereinstreuen bekannt geworden. Siehe beispielsweise EP 1 357 787 B1. Hieraus ist beispielsweise bekannt, dem Grundmaterial einer Tiereinstreu Verdickungsmittel beizufügen. Hierzu gehören unter anderem Guarkernmehl, Stärken und anderer Stoffe.

Guarkernmehl ist inzwischen außerordentlich teuer geworden, sodass ein geringer Anteil an Guarkernmehl wünschenswert ist. DE 195 43 311 C1 empfiehlt außer gewissen Zuschlagstoffen wie Guarkernmehl auch bestimmte Größenbereiche für eine Tiereinstreu in Gestalt von Pellets.

Die bisher bekannten organischen Tiereinstreuen sind verbesserungsbedürftig. Dies betrifft insbesondere die Saugfähigkeit der Tiereinstreu, der gegenseitige Abrieb zwischen Granulatkörnern, das hohe spezifische Gewicht und der Verbrauch an Tiereinstreu. Es betrifft ferner die Notwendigkeit des gründlichen Reinigens einer Katzentoilette, gegebenenfalls mit desodorierenden Reinigungsmitteln.

Der Erfindung liegt die Aufgabe zugrunde, eine organische, das heißt cellulosehaltige Tiereinstreu in Granulatform zu entwickeln, bei welcher die Saugfähigkeit gesteigert, der Verbrauch, das Schüttgewicht, der Anteil an Klumpenbildner und der Abrieb gleichzeitig gering gehalten werden. Insbesondere sollen Maßnahmen getroffen werden, mit denen ein Durchlaufen des Urins auf den Boden der Katzentoilette vermieden wird.

Diese Aufgabe wird durch die Merkmale von Anspruch 1 gehört.

Der Erfinder hat folgendes erkannt:
Bei Verwendung einer herkömmlichen Tiereinstreu legt der Urin die Wegstrecke zwischen dem Austritt aus dem Körper der Katze und dem Boden der Katzentoilette zurück. Dabei wird ein Teil des Urins von der Einstreu aufgesaugt, so dass von der Gesamt-Urinmenge immer noch ein Rest am Boden der Katzentoilette ankommt. Es ist aber wünschenswert, dass die Gesamt-Urinmenge vorher von der Tiereinstreu aufgesaugt wird. Die Erkenntnis liegt somit darin, eine Tiereinstreu zu verwenden, deren Sauggeschwindigkeit groß ist, so dass die Gesamtmenge des Urins vor Erreichen des Bodens der Katzentoilette aufgesaugt ist.

Die Sauggeschwindigkeit ist ein Parameter, der bisher noch nicht genügend beachtet wurde. Er ist nicht zu verwechseln mit anderen Parametern wie Saugkapazität. Ist die Sauggeschwindigkeit groß, dann ist die Saugdauer klein, das heißt die Zeitspanne zum Aufsaugen eines bestimmten Urin-Volumens pro Zeiteinheit. Die Saugdauer einer Katzenstreu wird über den sogenannten Vortex-Test bestimmt. Dabei werden 50 g Leitungswasser (20° C) in ein 100 ml Becherglas eingefüllt, ein Rührfisch (Länge 2,5 cm) hinzugefügt und das Becherglas auf den Magnetrührer gestellt. Der Magnetrührer wird auf eine Drehzahl von 700 U/min eingestellt. 5 g der zu untersuchenden Probe werden zugegeben und es wird eine Stoppuhr gestartet. Es wird die Zeitdauer bis zum Verschwinden einer sich gebildeten Trombe gestoppt, somit die Saugdauer. Das Verschwinden der Trombe soll erfindungsgemäß zwischen 30 und 10 Sekunden dauern. Ist dies der Fall, so benötigt man eine deutlich kleinere Menge an Tiereinstreu, um zu verhindern, dass der Katzenurin den Boden der Katzentoilette erreicht. Mit der Begrenzung auf eine minimale Saugdauer von 10 Sekunden wird sichergestellt, dass die Maßnahmen zum Steigern der Sauggeschwindigkeit, zum Beispiel durch Zugabe von Tensiden, in Grenzen gehalten werden können.

Beim Granulieren von cellulosischen Partikeln tritt häufig der Fall auf, dass sie an der Oberfläche "verhornen". Darunter versteht man, dass die Oberfläche glasig erscheint und sehr hart und völlig geschlossen ist. Dies führt zwangsläufig zu einer extrem niedrigen Sauggeschwindigkeit und damit zu einer langen Saugdauer, und ist typischerweise bei reiner Cellulose zu beobachten. Andere Materialien, zum Beispiel zerkleinerte Haferspelzen, sind aufgrund ihrer kubischen, stückigen Struktur sehr schlecht granulierbar, sodass Granulate, so sie überhaupt hergestellt werden können, mechanisch sehr instabil sind und einen hohen Abrieb aufweisen. Derartige Produkte enthalten daher viele Feinteile, die als Staub in einer Tiereinstreu unerwünscht sind.

Der Erfinder hat herausgefunden, dass eine bestimmte Korngröße besonders günstig ist. Sie empfehlen, dass zwischen 50 und 80 Gewichtsprozent der Granulatkörner eine Größe von zwischen 2 und 5,0 mm aufweisen. Damit wird das beschriebene Phänomen der Verhornung ausreichend unterdrückt. Es wurden Vergleichsversuche durchgeführt, und zwar mit einem konventionellen Material größerer Granulatkörner und einem erfindungsgemäßen Material mit einem Granulat kleinerer Granulatkörner. Bei beiden Versuchen wurden jeweils 25 ml künstlichen Katzenurins bei einer Temperatur von 37° C der Tiereinstreu zugegeben. Beim konventionellen Material führte dies dazu, dass in den Klumpen eine durchschnittliche Einstreumenge von 12 g gebunden wurde. Bei einer Tiereinstreu gemäß der Erfindung führte dies zu einem durchschnittlichen Verbrauch von nur 9 g pro Klumpen. Die Klumpen, die sich bei Anwendung der Erfindung ergeben, sind daher kleiner, als jene bei Anwendung von Material gemäß dem Stande der Technik. Dies ist gleichbedeutend mit einer Reduzierung der Verbrauchsmenge um 25 %.

Der Erfinder hat weiterhin folgende Zusammenhänge erkannt: Werden Granulat-Pellets zu kleineren Körnern aufgebrochen, so entsteht beim Aufbrechvorgang auch ein gewisser Anteil an Feinstpartikeln wie Staub, die man nicht im Produkt haben will. Sie müssen dem Produktionsprozess wieder zugeführt werden. Das bedeutet, dass dieser Anteil an Feinstpartikeln nochmals durch die Pelletpresse läuft und ein zweites mal verpresst wird. Man hätte erwarten können, dass bei hohem Anteil solcher Feinstpartikel das entstehende Produkt durch den zweiten Pressvorgang stärker verhornt und die Sauggeschwindigkeit reduziert. Dies ist jedoch nicht der Fall. Der nachteilige Einfluss von Feinstpartikeln ist somit sehr gering.

Neben dem Rohstoff ist auch die Art der Granulierung entscheidend für die Sauggeschwindigkeit und damit für die Saugdauer. So führt zum Beispiel ein zu hartes Verpressen bei der Pelletierung oder Walzenkompaktierung zwar zu einem abriebarmen Granulat, aber gleichzeitig ist die Oberfläche stark verdichtet und weist eine lange Saugdauer auf. Es konnte ermittelt werden, dass ein Abrieb des Granulats zwischen 2 und 30 % notwendig ist, damit sowohl die Sauggeschwindigkeit beziehungsweise Saugdauer als auch der Staubgehalt des Materials akzeptabel sind.

Der Abrieb wird mit einer Retsch Analysensiebmaschine Typ AS 200 control und 20 Edelstahlkugeln (a 10g, Ø 11mm) bestimmt. Dazu werden 100,0 g des zu untersuchenden Materials sowie die Edelstahlkugeln auf ein 1000 µm-Analysensieb gegeben und für 2 Minuten bei einer Amplitude von 2,5 gesiebt. Die Fraktion < 1000 µm entspricht dem Abrieb.

Die Bestimmung der Partikelgröße erfolgt als Feret-Durchmesser durch dynamische Bildanalyse mit Hilfe des Partikelmessgeräts CAMSIZER (Fa. Retsch Technology GmbH) und der zugehörige Auswertesoftware Version 3.30 x 9 von Retsch Technology GmbH und Jenoptik L.O.S. GmbH.

Zusätze jeglicher Art beeinflussen ebenfalls die Sauggeschwindigkeit/Saugdauer. So begünstigen klumpenbildende Additive ein schnelles Aufsaugen beziehungsweise das Festhalten von Flüssigkeit in den oberen Schichten der Einstreu. Klumpenbildende Additive können prinzipiell Cellulose- und Stärkederivate, Pflanzengummis wie Guarkernmehl sowie andere, literaturbekannte Verdicker sein. Es ist ein Zusatz von mindestens 3 % klumpenbildendes Additiv nötig, um ein Durchlaufen der Flüssigkeit auf den Boden der Katzentoilette zu verhindern.

Durch die feinere Partikelform tritt keine starke Absonderung des Abriebes auf, der dann in Form von Staub vorliegt (Staubkorngröße kleiner 1000 µm). Der Staub verbleibt in der Masse der Partikel. Er setzt sich nicht am Boden der Verpackung und auch nicht am Boden der Katzentoilette ab, wobei der Staub auf unangenehme Weise in Erscheinung treten würde.

Die geringe Partikelgröße führt zu einer großen Oberfläche der Granulatkörper, mit hoher Sauggeschwindigkeit und damit kurzer Saugdauer. Deshalb ist eine Tensidzugabe überhaupt nicht mehr zwingend notwendig. Wird Tensid zugegeben, so kann dies eine vernachlässigbar geringe Menge sein, bezogen auf das Gesamtgewicht der Einstreu. Die maximale Menge wird ein Prozent, bezogen auf das Gewicht der Katzenstreu, nicht überschreiten.

Im Übrigen kann die Tiereinstreu weitere Additive enthalten, wie sie in der Literatur beschrieben sind (Farbstoffe oder ähnliches als Urinindikatoren, Aromastoffe usw.

## Patentansprüche

1. Organische Tiereinstreu, umfassend die folgenden Merkmale beziehungsweise Bestandteile:
1.1 wenigstens 30 % granulierte Holzpartikel, bezogen auf die Gesamtmenge der Tiereinstreu;
1.2 wenigstens 10 Prozent, bevorzugt wenigstens 20 Prozent, besonders bevorzugt wenigstens 30 Prozent der Granulatkörner weisen eine maximale Abmessung von kleiner 3 mm auf;
1.3 der Abrieb der Granulate liegt zwischen 2 und 30 Gewichtsprozent;
1.4 mindestens 3 Gewichtsprozent Klumpenbildner;
1.5 die Saugdauer liegt zwischen 60 und 10 s, bevorzugt zwischen 45 und 10s, am besten zwischen 30 und 10s, gemessen nach dem Vortex-Verfahren

2. Tiereinstreu nach Anspruch 1, **dadurch gekennzeichnet, dass** das Verdickungsmittel Cellulose- und Stärkederivate, Pflanzengummis wie Guarkernmehl, Tarakernmehl, Johannisbrotkernmehl umfasst.

3. Tiereinstreu nach Anspruch 1 und 2, **dadurch gekennzeichnet, dass** sie maximal 10 % weitere Additive enthält.

4. Tiereinstreu nach Anspruch 1, **dadurch gekennzeichnet, dass** diese frei von Tensiden ist.
